# EUROPÄISCHE PATENTSCHRIFT

(11) **EP 4 459 225 B1**
(45) Veröffentlichungstag und Bekanntmachung des Hinweises auf die Patenterteilung: **01.04.2026**
(21) Anmeldenummer: 24192774.8
(22) Anmeldetag: 23.09.2021
(51) Int. Cl.: G01B 11/06

(54) **ANORDNUNG ZUR DICKENMESSUNG EINER KONTINUIERLICHEN MATERIALBAHN**
DEVICE FOR MEASURING THE THICKNESS OF A CONTINUOUS SHEET OF MATERIAL
AGENCEMENT DE MESURE DE L'ÉPAISSEUR D'UNE BANDE CONTINUE DE MATIÈRE

(43) Veröffentlichungstag der Anmeldung: 06.11.2024
(62) Teilanmeldung aus: 21198570.0
(73) Patentinhaber: Matthews International GmbH, 48691 Vreden (DE); Matthews International Corporation, Pittsburgh, Pennsylvania 15212 (US)
(72) Erfinder: HACKFORT, Thomas, 48683 Ahaus-Altstätte (DE); LANSING, Christoph, 48691 Vreden (DE); KLEINGRIES, Carsten, 48691 Vreden (DE); WANTIA, Gerrit, 48691 Vreden (DE)
(74) Vertreter: Holzwarth-Rochford, Andreas

(56) Entgegenhaltungen:
- DE-A1- 3 335 766
- JP-A- H08 233 541

## Beschreibung

Die vorliegende Erfindung betrifft eine Anordnung zur berührungslosen Dickenmessung einer kontinuierlichen, insbesondere flexiblen, elastischen und/oder beschichteten, Materialbahn, aufweisend:
eine über eine Oberfläche eines, insbesondere zumindest abschnittsweise zylindrischen, Kontaktkörpers geführte Materialbahn;
eine Sensoranordnung zum Messen der Materialbahndicke, wobei zumindest ein erster Sensor auf eine Materialbahnoberseite und zumindest ein zweiter Sensor dem ersten Sensor gegenüberliegend auf eine Materialbahnunterseite gerichtet ist.

Aus der Druckschrift DE 10 2019 121 959 B4 ist ein Verfahren zur Herstellung einer Kunststofffolie bekannt, bei dem schmelzflüssiges Kunststoffmaterial aus einer Flachdüse in eine Förderrichtung ausgebracht wird und nachfolgend abkühlt, wobei die Flachdüse in Breitenrichtung der Kunststofffolie nebeneinander eine Anzahl Düsenbolzen aufweist, mit denen die Größe des Austragspalts des schmelzflüssigen Kunststoffmaterials beeinflusst werden kann, wobei in Förderrichtung hinter der Flachdüse eine Messeinrichtung für die Messung der Dicke der hergestellten Kunststofffolie angeordnet ist. Allerdings ist die Messeinrichtung zur Messung der dicke der Folie in Förderrichtung hinter der Abhebewalze angeordnet. Diese Anordnung weist den Nachteil auf, dass die Folie ohne eine Abstützeinrichtung am Messort frei schwebend ist und es daher zu Vibrationen bzw. einem Flimmern kommen kann, welches das Messergebnis verfälschen kann.

Aus der Druckschrift EP 0 472 872 A3 sind ein Verfahren und eine Vorrichtung zur Ermittlung der Dicke der von einer Beschichtungsvorrichtung auf eine Bahn aufgebrachten Beschichtung bekannt. Dabei wird die Dicke der auf die Trägerbahn aufgebrachten Beschichtung auf einer Auftragswalze vor und hinter einem Berührungsbereich der Auftragswalze mit der zu beschichtenden Bahn gemessen und aus der Differenz der gemessenen Filmdicken die Dicke der von der Bahn abgenommenen Beschichtung bestimmt. Die offenbarte Vorrichtung weist jedoch den Nachteil auf, dass das Messergebnis abhängig von den Rundlaufeigenschaften und Vibrationen in der Auftragswalze ist.

JP H08 233541 A offenbart eine Anordnung zur berührungslosen Dickenmessung einer kontinuierlichen Materialbahn mit einem zylindrischen Kontaktkörper, über den die Materialbahn geführt wird, wobei der Kontaktkörper in Umfangsrichtung mehrere radiale, axial verlaufende Schlitze aufweist, wobei die Dicke der Materialbahn mittels zweier Sensoren bestimmt wird, welche über der Materialbahn und unter dem Kontaktkörper angeordnet sind.

Der Erfindung liegt daher die Aufgabe zugrunde, eine Vorrichtung bzw. ein Verfahren zur Messung einer Foliendicke derart zu verbessern, dass dieses ein genaueres Messergebnis liefert.

Die Aufgabe wird gelöst mit einer Vorrichtung bzw. einem Verfahren mit den Merkmalen der unabhängigen Ansprüche.

Demgemäß ist vorgesehen, dass der zweite Sensor zumindest abschnittsweise unterhalb des Kontaktbereichs zwischen der Materialbahn und dem Kontaktkörper angeordnet ist. Die Erfindung weist somit einerseits den Vorteil auf, dass die Folie im Bereich der Dickenmessung einerseits durch den Kontaktkörper abgestützt ist und daher Vibrationen in der Folie vermieden werden und andererseits, dass außerdem durch gleichzeitige Messung der Foliendicke an Ober- und Unterseite der Folie durch den Kontaktkörper induzierte Einflussgrößen automatisch herausgerechnet werden. Dabei kann vorgesehen sein, dass der Kontaktkörper einen ebenen Kontaktbereich aufweist. Es kann außerdem vorgesehen sein, dass der Kontaktkörper einen zumindest abschnittsweise konvexen Kontaktbereich aufweist. Insbesondere ist vorgesehen, dass die Materialbahnunterseite an der Oberfläche des Kontaktkörpers im Kontaktbereich vorbeigeführt wird. Dabei kann vorgesehen sein, dass die Materialbahn durch den Kontaktbereich in einem vorbestimmten Maß umgelenkt wird, so dass die Materialbahn vor und nach dem Kontaktbereich einen Winkel von größer als 0° einschließt. Insbesondere kann vorgesehen sein, dass die Materialbahn im Bereich der Dickenmessung zumindest abschnittsweise, insbesondere durch den Kontaktkörper, abgestützt wird. Die Materialbahn kann insbesondere eine flexible, elastische und/oder beschichtete Folie sein. Der Bereich der Dickenmessung kann durch die überlappenden Erfassungsbereiche der gegenüberliegenden und aufeinander zu gerichteten Sensoren definiert sein. Es kann vorgesehen sein, dass über die Breite der Materialbahn eine Mehrzahl gegenüberliegender Sensorenpaare angeordnet ist. Dabei kann insbesondere vorgesehen sein, dass jeweils ein Sensor jedes Sensorenpaars zumindest abschnittsweise unterhalb des Kontaktbereichs zwischen der Materialbahn und dem Kontaktkörper angeordnet ist. Es kann vorgesehen sein, dass die Sensoren zur Messung einer Distanz ausgebildet sind. Es kann vorgesehen sein, dass der erste Sensor zum Erfassen der Distanz zwischen erstem Sensor und der Materialbahnoberseite und der zweite Sensor zum Erfassen der Distanz zwischen zweitem Sensor und der Materialbahnunterseite ausgebildet ist. Es kann vorgesehen sein, dass der erste Sensor und der zweite Sensor in einem vorbestimmten Abstand zueinander angeordnet sind.

Die Dicke der Materialbahn kann somit aus der Differenz zwischen dem vorbestimmten Abstand der Sensoren zueinander und der Summe der beiden gemessenen Distanzen des ersten und des zweiten Sensors berechnet werden.

Es kann vorgesehen sein, dass der zweite Sensor zumindest abschnittsweise mit einer Querschnittsfläche des zylindrischen Abrollkörpers überlappt und zwischen einer Rotationachse und der Oberfläche des zylindrischen Abrollkörpers angeordnet ist. Es kann vorgesehen sein, dass der zweite Sensor vollständig innerhalb der Querschnittsfläche des zylindrischen Abrollkörpers angeordnet liegt.

Ferner kann vorgesehen sein, dass der Erfassungsbereich des zweiten Sensors zumindest abschnittsweise eine Unterseite des Kontaktkörpers, insbesondere eine innere Oberfläche des zylindrischen Abrollkörpers, umfasst. Es kann vorgesehen sein, dass eine Erfassungseinrichtung des zweiten Sensors in Richtung der Unterseite des Kontaktkörpers oder der inneren Oberfläche weist. Es kann vorgesehen sein, dass eine Erfassungseinrichtung des ersten Sensors auf die Materialbahnoberseite gerichtet ist. Es kann vorgesehen sein, dass die Erfassungsbereiche des ersten und des zweiten Sensors exakt gegenüberliegen.

Außerdem kann vorgesehen sein, dass der zylindrische Abrollkörper einen Hohlraum aufweist, in welchem der zweite Sensor aufgenommen ist. Der Hohlraum kann so bemessen sein, dass der zweite Sensor in dem zylindrischen Abrollkörper statisch anordenbar ist, ohne in Kontakt mit dem um den zweiten Sensor rotierenden zylindrischen Abrollkörper zu kommen. Des Weiteren kann der zylindrische Abrollkörper hülsenförmig ausgebildet sein. Der zylindrische Abrollkörper kann drehbar gelagert sein, so dass die in Bewegung befindliche Materialbahn, insbesondere frei von Schlupf, auf diesem abrollt. Der zylindrische Abrollkörper kann galvanisch hergestellt sein.

Es kann vorgesehen sein, dass die Oberfläche des zylindrischen Abrollkörpers zumindest einen zumindest abschnittweise im Erfassungsbereich des zweiten Sensors liegenden Durchbruch aufweist. Es kann vorgesehen sein, dass die Materialbahn an dem Durchbruch vorbeigeführt wird. Es kann vorgesehen sein, dass der Durchbruch in den Hohlraum mündet.

Ferner kann vorgesehen sein, dass der Durchbruch sich im Wesentlichen tangential entlang der Oberfläche des zylindrischen Abrollkörpers erstreckt. Dadurch kann sich der Durchbruch in der Bewegungsrichtung der Materialbahn entlang der am Durchbruch vorbeigeführten Materialbahn erstrecken. Der Durchbruch kann eine Breite von größer als 0,5 cm aufweisen. Es kann vorgesehen sein, dass die Durchbrüche Ausnehmungen in dem Material des zylindrischen Abrollkörpers sind.

Außerdem kann vorgesehen sein, dass sich der Durchbruch mit zumindest einer Unterbrechung um den gesamten Umfang des zylindrischen Abrollkörpers erstreckt. Es kann vorgesehen sein, dass der Durchbruch, insbesondere regelmäßig beabstandet voneinander, zwei, drei oder vier Unterbrechungen aufweist. Die so über den Umfang verteilten Durchbrüche können jeweils die gleiche Länge aufweisen. Eine Unterbrechung kann dadurch gekennzeichnet sein, dass in diesem Bereich zumindest ein Steg aus dem Material des zylindrischen Abrollkörpers vorgesehen ist, mittels welchem die Struktur des zylindrischen Abrollkörpers stabilisiert wird.

Es kann vorgesehen sein, dass die Oberfläche des zylindrischen Abrollkörpers eine Mehrzahl parallel beabstandeter Durchbrüche aufweist. Die Abstände zwischen den Durchbrüchen können jeweils gleich sein. Die Durchbrüche können durch stegförmige Abstandselemente voneinander beabstandet sein. Es kann vorgesehen sein, dass die Durchbrüche eine größere Breite aufweisen als die stegförmigen Abstandselemente.

Ferner kann vorgesehen sein, dass die Oberfläche des Kontaktkörpers, insbesondere des zylindrischen Abrollkörpers, eine Siebstruktur aufweist. Die Siebstruktur kann eine Mehrzahl, insbesondere regelmäßig auf der Oberfläche des Kontaktkörpers, insbesondere des zylindrischen Abrollkörpers, verteilter, Durchbrüche aufweisen. Die Durchbrüche können länglich sein. Die Durchbrüche können kreisförmig sein. Die Durchbrüche können oval sein. Die Durchbrüche können eckig sein. Die Durchbrüche können viereckig sein. Die Durchbrüche können rechteckig sein. Die Durchbrüche können quadratisch sein. Die Durchbrüche können wabenförmig sein. Der Flächenanteil der Durchbrüche mit Bezug auf die Gesamtoberfläche des Kontaktkörpers kann größer sein als 50 %, vorzugsweise größer als 60 %, besonders bevorzugt größer als 70 %.

Außerdem kann vorgesehen sein, dass die Sensoren an zumindest einer quer zur Bewegungsrichtung der Materialbahn verstellbaren Linearführung befestigt sind. Die Linearführung kann motorisch verstellbar sein. Die Linearführung kann ferner Mittel zum händischen Verstellen aufweisen. Mittels der Linearführung ist es möglich, die Sensoranordnung quer zur Bewegungsrichtung der Materialbahn zu verstellen und Dickenmessungen an verschiedenen Orten der Materialbahn durchzuführen. Die Anordnung kann eine Regelung aufweisen, mittels welcher die Linearführung ansteuerbar ist. Beispielsweise kann die Sensoranordnung zwei Sensorpaare umfassen, welche quer zur Bewegungsrichtung der Materialbahn voneinander beabstandet angeordnet sein können und quer zu dieser linear verstellbar sind. Detektiert nun ein Sensorpaar der Sensoranordnung eine Abweichung von einer vorgegebenen bzw. gewünschten Materialdicke, kann die Linearführung so angesteuert werden, dass die Sensoranordnung in Richtung der detektierten Abweichung seitlich verstellt wird. Ferner kann die Regelung umfassen, dass bei Überschreiten einer maximal zulässigen Dickenabweichung ein Nothalt eingeleitet wird und beispielsweise ein weiterer Materialvorschub gestoppt wird.

Ferner kann vorgesehen sein, dass der zylindrische Abrollkörper an seinen Stirnseiten über Dünnringlager gelagert ist. Alternativ kann zur Lagerung des zylindrischen Abrollkörpers jede weitere Lagerung infrage kommen, welche eine hohe Rundlaufgenauigkeit gewährleistet.

Des Weiteren kann vorgesehen sein, dass die Sensoren in Relation zur Bewegungsrichtung der Materialbahn stationär angeordnet sind. Dadurch ist es der Sensoranordnung ermöglicht, fortlaufend die Dicke der vorbeigeführten Materialbahn zu detektieren. Ferner kann vorgesehen sein, dass die Sensoren quer zur Bewegungsrichtung der Materialbahn kontinuierlich oder diskontinuierlich verstellt werden. Dabei kann vorgesehen sein, dass die Sensoranordnung so lange in eine Richtung verstellt wird, bis ein äußerer Rand der Materialbahn erreicht ist, und die Sensoranordnung dann in die umgekehrte Richtung verstellt wird, bis der gegenüberliegende Rand der Materialbahn erreicht ist usw.

Die Erfindung betrifft außerdem ein Verfahren zur berührungslosen Dickenmessung einer, insbesondere flexiblen, elastischen und/oder beschichteten, Materialbahn mit den Schritten:
Führen einer Materialbahn über einen, insbesondere zumindest abschnittsweise zylindrischen, Kontaktkörper;
Gleichzeitiges Erfassen einer Materialbahnoberseite mittels eines ersten Sensors und einer Materialbahnunterseite mittels eines zweiten Sensors, wobei die Erfassungsbereiche beider Sensoren miteinander fluchten, und wobei der zweite Sensor zumindest abschnittsweise unterhalb des Kontaktbereichs zwischen der Materialbahn und dem Kontaktkörper angeordnet ist;
Bestimmen der Materialbahndicke anhand der erfassten Sensorwerte des ersten und des zweiten Sensors.

Dabei kann vorgesehen sein, dass die Materialbahn durch den Kontaktkörper umgelenkt wird. Durch dieses Vorbeiführen der Materialbahn unter Erzeugung einer Umlenkung kann sichergestellt werden, dass die Materialbahn im Kontaktbereich am Kontaktkörper anliegt und Vibrationen in der Materialbahn vermieden werden.

Beispielhafte Ausführungsformen der Erfindung werden anhand der nachfolgenden Figuren erläutert. Dabei zeigt:

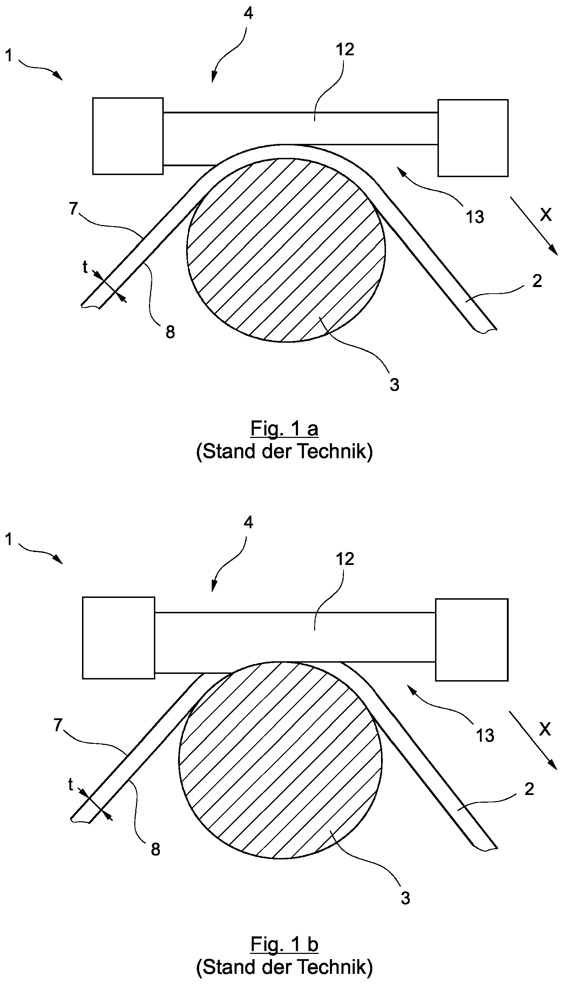

Fig. 1 a) eine Querschnittsansicht einer ersten aus dem Stand der Technik bekannten Methode zum Erfassen einer Materialbahndicke;
Fig. 1 b) eine Querschnittsansicht einer zweiten aus dem Stand der Technik bekannten Methode zum Erfassen einer Materialbahndicke;
Fig. 2 a) eine Querschnittsansicht einer dritten aus dem Stand der Technik bekannten Methode zum Erfassen einer Materialbahndicke;

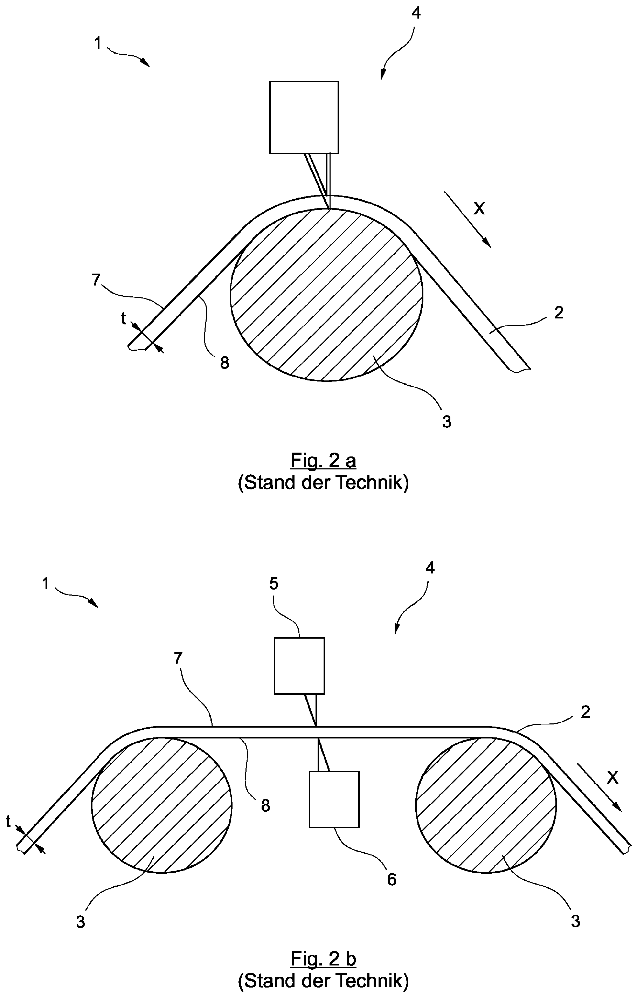

Fig. 2 b) eine Querschnittsansicht einer vierten aus dem Stand der Technik bekannten Methode zum Erfassen einer Materialbahndicke;

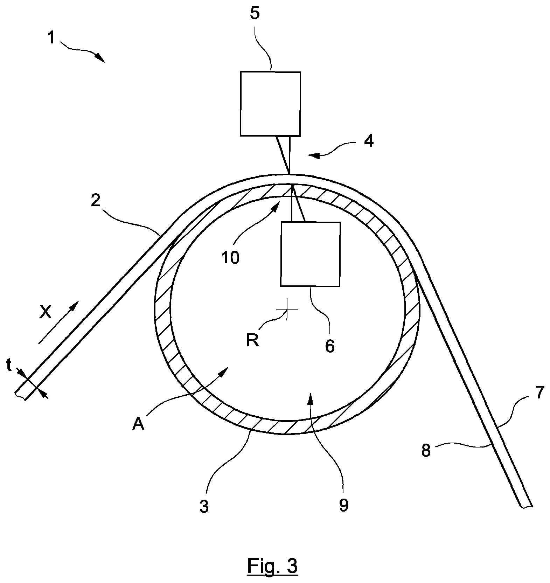

Fig. 3 eine Querschnittsansicht einer Ausführungsform der erfindungsgemäßen Methode zum Erfassen einer Materialbahndicke;

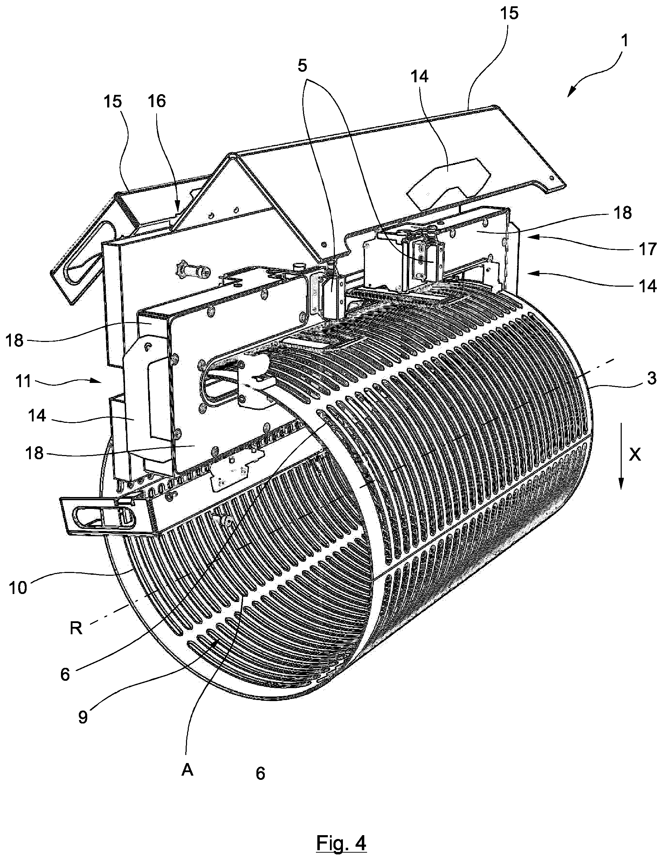

Fig. 4 eine perspektivische Ansicht einer erfindungsgemäßen Sensoranordnung zum Erfassen einer Materialbahndicke.

Fig. 1a und 1b zeigen jeweils Anordnungen 1 zur kontinuierlichen Dickenmessung, bei welchem die Dickenmessung einer Materialbahn 2 mittels eines Lichtvorhangs 12 vorgenommen wird, wobei ein von der Materialbahn erzeugter Abschattungsbereich 13 als Grundlage zur Bestimmung der Materialbahndicke t dient. In Fig. 1a ist eine Sensoranordnung 4 so platziert, dass der Lichtvorhang 12 bündig mit der Oberseite einer Walze 3, über welche die Materialbahn 2 geführt wird, abschließt, so dass die Walze 3 den Lichtvorhang 12 gerade nicht abschattet. Beim Hindurchführen der Materialbahn durch den Erfassungsbereich der Sensoranordnung 4 schattet die über die Walzenoberseite überstehende Materialbahn 2 den Lichtvorhang 12 so ab, dass die Materialdicke t der Materialbahn 2 der Breite des Abschattungsbereichs 13 entspricht. Davon subtrahiert wird eine zuvor erfasste gespeicherte Rundlaufcharakteristik der Walze. Der Nachteil bei dieser Anordnung besteht jedoch darin, dass die Dicke der Materialbahn nur indirekt aus der Rundlauftopografie der Walze 3 errechnet werden kann. Ändert sich dabei aus bestimmten Gründen die Laufcharakteristik der Walze 3, führt dies zu Messtoleranzen.

Fig. 1b zeigt eine gegenüber dem Aufbau aus Fig. 1a leicht abgewandelte Erfassungsmethode zur Bestimmung der Dicke t der Materialbahn 2. Bei dieser Erfassungsmethode ist die Sensoranordnung 4 so angeordnet, dass der Lichtvorhang 12 über die Materialbahn hinaus auch einen Randabschnitt der Walze 3 erfasst, so dass auch ohne Anwesenheit einer Materialbahn 2 stets ein vorbestimmter Abschattungsbereich 13 erzeugt wird. Der Nachteil bei dieser Methode besteht jedoch darin, dass die Dicke t der Materialbahn 2 bei dieser nur indirekt aus dem Messergebnis abgeleitet werden kann, da die Toleranzen der Walze 3 immer in die Messtoleranzen mit eingehen. Die Toleranzen der Walze 3 bestimmen sich dabei über den Rundlauf und die Zylindrizitätsabweichungen der Messstellen neben der Materialbahn 2 und auf der Materialbahn 2.

Die Figuren 2a und 2b zeigen zwei weitere aus dem Stand der Technik bekannte Methoden zur Erfassung der Dicke t einer Materialbahn 2. Der Aufbau in Fig. 2a umfasst dabei eine Sensoranordnung 4, welche senkrecht auf eine in einer Materialbewegungsrichtung X über eine rotierende Walze 3 geführte Materialbahn 2 gerichtet ist. Die Materialdicke t wird dabei über eine Triangulation bestimmt, bei der vom Sensor ausgesendete Strahlen zum einen an der Materialoberseite 7 und zum anderen an der Materialunterseite 8 reflektiert werden, wobei die Materialdicke t der Wegdifferenz der unterschiedlichen zurückgeworfenen Strahlen entspricht. Davon subtrahiert wird eine zuvor erfasste gespeicherte Rundlaufcharakteristik der Walze. Der Nachteil bei dieser Anordnung besteht jedoch ebenfalls darin, dass die Dicke t der Materialbahn nur indirekt aus der Rundlauftopografie der Walze 3 errechnet werden kann. Ändert sich dabei aus bestimmten Gründen die Laufcharakteristik der Walze 3, führt dies zu Messtoleranzen.

Demgegenüber weist der in Fig. 2b gezeigte Aufbau zwei Umlenkwalzen 3 auf, über welche die Materialbahn 2 nacheinander herübergeführt wird. Zwischen den Umlenkwalzen 3 ist eine Sensoranordnung 4 angeordnet, welche einen auf die Materialbahnoberseite 7 gerichteten ersten Sensor 5 und einen auf die Materialbahnunterseite 8 gerichteten Sensor 6 aufweist, welche jeweils senkrecht zur Materialbahn 2 angeordnet sind und wobei die Erfassungsbereiche beider Sensoren 5, 6 fluchten. Der Nachteil dieser Anordnung besteht jedoch darin, dass die frei schwebende Materialbahn dazu neigt zu vibrieren bzw. zu flimmern. Die Laufruhe wird dabei über die Materialbahntoleranz gestört.

Fig. 3 zeigt eine Querschnittsansicht einer Ausführungsform der erfindungsgemäßen Anordnung 1 zur berührungslosen Dickenmessung einer, insbesondere flexiblen, elastischen und/oder beschichteten, Materialbahn 2. Diese weist einen zylindrischen Abrollkörper 3 auf, welcher hülsenförmig ist und einen durchgängigen Hohlraum 9 aufweist. Der Abrollkörper 3 weist eine kreisrunde Querschnittsfläche A und eine Rotationsachse R auf. Über eine äußere Oberseite des zylindrischen Abrollkörpers 3 ist in einer Bewegungsrichtung X eine Materialbahn 2 geführt, welche durch den zylindrischen Abrollkörper 3 umgelenkt wird und auf diesem schlupffrei abrollt. Die Anordnung 1 umfasst ferner eine Sensoranordnung 4, welche einen ersten Sensor 5 aufweist, welcher auf eine Materialbahnoberseite 7 gerichtet ist, und welche einen zweiten Sensor 6 umfasst, welcher auf eine Materialbahnunterseite 8 gerichtet ist. Die Sensoren weisen Erfassungseinrichtungen auf, deren Erfassungsrichtung jeweils senkrecht zur Materialober- bzw. -unterseite gerichtet ist. Die Erfassungsbereiche beider Sensoren 5, 6 fluchten exakt miteinander, so dass die Dicke t der Materialbahn 2 senkrecht zu deren Hauptausbreitungsrichtung gemessen wird. Der zweite Sensor 6 ist im Hohlraum 9 des zylindrischen Abrollkörpers 3 angeordnet und befindet sich zwischen dem Außenumfang der zylindrischen Abrollvorrichtung 3 und deren Rotationsachse R. Der zylindrische Abrollkörper 3 weist an seiner Oberfläche eine Mehrzahl Durchbrüche 10 auf, welche jeweils in den Hohlraum 9 münden. Die Durchbrüche 10 erstrecken sich im Wesentlichen tangential entlang der Oberfläche des Abrollkörpers 3, so dass bei einer Rotation des zylindrischen Abrollkörpers 3 der Erfassungsbereich des Sensors 6 über einen größtmöglichen Zeitabschnitt oder Umfangsabschnitt des zylindrischen Abrollkörpers 3 hinweg die Materialbahnunterseite 8 durch den Durchbruch 10 hindurch erfasst. Somit ist der zylindrische Abrollkörper 3 im Grunde genommen eine Hülse mit einer Siebstruktur. Diese weist eine hohe Rundlaufgenauigkeit auf und kann galvanisch hergestellt sein. Der große Vorteil der erfindungsgemäßen Vorrichtung besteht daher darin, dass die Materialbahn 2 im Erfassungsbereich beider Sensoren 5, 6 durch den zylindrischen Abrollkörper 3 abgestützt wird und daher keine Vibration wie bei einer frei schwebenden Materialbahn auftreten kann. Gleichzeitig können Rundlaufungenauigkeiten des zylindrischen Abrollkörpers 3 jederzeit herausgerechnet werden, da die Erfassung der Materialbahn 2 an der Oberseite 7 und an der Unterseite 8 gleichzeitig erfolgt.

Fig. 4 zeigt eine perspektivische Ansicht einer Ausführungsform der erfindungsgemäßen Anordnung 1. Wie zu erkennen ist, ist der zylindrische Abrollkörper 3 in Form einer eine Mehrzahl gleichförmiger Durchbrüche 10 aufweisenden Hülse ausgebildet. Die Hülse 3 weist eine Rotationsachse R auf und ist stirnseitig jeweils über Dünnringlager gelagert, welche jedoch nicht dargestellt sind. Es ist vorgesehen, dass die Hülse 3 sich in einer Bewegungsrichtung X bewegt bzw. dreht. Zur besseren Anschaulichkeit ist in der Darstellung keine Materialbahn 2 abgebildet. Die Durchbrüche 10 sind so ausgestaltet, dass über den Umfang der Hülse 3 verteilt jeweils 6 regelmäßig beabstandete Schlitze verteilt sind, welche jeweils durch kurze Materialstege voneinander beabstandet sind. Die Hülse weist in Achsenausbreitungsrichtung eine Mehrzahl solcher über den Umfang verteilter Durchbrüche 10 auf, welche seitlich jeweils regelmäßig voneinander beabstandet sind. Die Durchbrüche 10 verlaufen ferner jeweils senkrecht zur Rotationsachse R. Die Hülse 3 umschließt eine Querschnittsfläche A und weist einen Hohlraum 9 auf. Die Sensoranordnung 4 ist an einem Sensorträger 17 befestigt, welcher die Hülse 3 mittels Trägerarmen 18 über ihre Randbereiche so U-förmig umgreift, dass die zwei an dem Sensorträger 17 befestigten und seitlich voneinander beabstandeten ersten Sensoren 5 auf eine äußere Oberfläche der Hülse 3 und die zwei den ersten Sensoren 5 gegenüberliegenden zweiten und seitlich voneinander beabstandeten Sensoren 6 auf eine innere Oberfläche der Hülse 3 gerichtet sind. Dabei sind die ersten Sensoren 5 jeweils an einem äußeren Trägerarm 18 und die zweiten Sensoren 6 jeweils an einem inneren Trägerarm 18 befestigt. Der Sensorträger 17 ist über eine Linearführung 11 quer zur Bewegungsrichtung X der Materialbahn 2 seitlich verstellbar. An beiden Enden des Sensorträgers 17 sind dazu Handgriffe 14 befestigt. Dadurch können die zwei Sensorpaarungen über die gesamte Breite der Materialbahn 2 verstellt werden, um entsprechend an jedem Ort Dickenmessungen durchführen zu können. An die Linearführung 11 über Scharniere 16 anscharniert sind ferner Abdeckungen 15, welcher zur Erhöhung der Sensorgenauigkeit während des Betriebs zur Verdunklung des Erfassungsbereichs heruntergeklappt werden können. Die Abdeckungen 15 weisen jeweils einen Handgriff 14 zum Bedienen der Abdeckung 15 auf.

### Bezugszeichenliste

- 1: Anordnung zur berührungslosen Dickenmessung
- 2: Materialbahn
- 3: zylindrischer Abrollkörper
- 4: Sensoranordnung
- 5: erster Sensor
- 6: zweiter Sensor
- 7: Materialbahnoberseite
- 8: Materialbahnunterseite
- 9: Hohlraum
- 10: Durchbruch
- 11: Linearführung
- 12 13: Lichtvorhang Schatten
- 14: Handgriffe
- 15: Abdeckung
- 16: Scharnier
- 17: Sensorträger
- 18: Trägerarm
- A: Querschnittsfläche
- t: Materialbahndicke
- R: Rotationsachse
- X: Bewegungsrichtung Materialbahn

## Patentansprüche

1. Anordnung (1) zur berührungslosen Dickenmessung einer kontinuierlichen, insbesondere flexiblen, elastischen und/oder beschichteten, Materialbahn (2), aufweisend:
einen zumindest abschnittsweise zylindrischen und hülsenförmigen Kontaktkörper (3);
eine über eine Oberfläche des Kontaktkörpers (3) geführte Materialbahn (2);
eine Sensoranordnung (4) zum Messen der Materialbahndicke (t), wobei zumindest ein erster Sensor (5) auf eine Materialbahnoberseite (7) und zumindest ein zweiter Sensor (6) dem ersten Sensor (5) gegenüberliegend auf eine Materialbahnunterseite (8) gerichtet ist;
**dadurch gekennzeichnet, dass** der zweite Sensor (6) zumindest abschnittsweise innerhalb des Kontaktkörpers (3) und unterhalb des Kontaktbereichs zwischen der Materialbahn (2) und dem Kontaktkörper (3) angeordnet ist.

2. Anordnung (1) nach Anspruch 1, wobei
der zweite Sensor (6) zumindest abschnittsweise mit einer Querschnittsfläche (A) des zylindrischen Kontaktkörpers (3) überlappt und zwischen einer Rotationachse (R) und der Oberfläche des zylindrischen Kontaktkörpers (3) angeordnet ist.

3. Anordnung (1) nach Anspruch 1 oder 2, wobei
der Erfassungsbereich des zweiten Sensors (6) zumindest abschnittsweise eine Unterseite des Kontaktkörpers, insbesondere eine innere Oberfläche des zylindrischen Kontaktkörpers (3), umfasst.

4. Anordnung (1) nach einem der vorangehenden Ansprüche, wobei
der zylindrische Kontaktkörper (3) einen Hohlraum (9) aufweist, in welchem der zweite Sensor (6) aufgenommen ist.

5. Anordnung (1) nach einem der vorangehenden Ansprüche, wobei
die Oberfläche des Kontaktkörpers (3) zumindest einen zumindest abschnittweise im Erfassungsbereich des zweiten Sensors (6) liegenden Durchbruch (10) aufweist.

6. Anordnung (1) nach Anspruch 5, wobei
der Durchbruch (10) sich im Wesentlichen tangential entlang der Oberfläche des zylindrischen Kontaktkörpers (3) erstreckt.

7. Anordnung (1) nach Anspruch 5 oder 6, wobei
sich der Durchbruch (10) mit zumindest einer Unterbrechung um den gesamten Umfang des zylindrischen Kontaktkörpers (3) erstreckt.

8. Anordnung (1) nach einem der vorangehenden Ansprüche, wobei
die Oberfläche des zylindrischen Kontaktkörpers (3) eine Mehrzahl parallel beabstandeter Durchbrüche (10) aufweist.

9. Anordnung (1) nach einem der vorangehenden Ansprüche, wobei
die Oberfläche des zylindrischen Kontaktkörpers (3) eine Siebstruktur aufweist.

10. Anordnung (1) nach einem der vorangehenden Ansprüche, wobei
die Sensoren (5, 6) in Relation zur Bewegungsrichtung der Materialbahn (X) stationär angeordnet sind.

11. Anordnung (1) nach einem der vorangehenden Ansprüche, wobei
die Sensoren (5, 6) an zumindest einer quer zur Bewegungsrichtung der Materialbahn (X) verstellbaren Linearführung (11) befestigt sind.

12. Anordnung (1) nach einem der vorangehenden Ansprüche, wobei
der zylindrische Kontaktkörper (3) an seinen Stirnseiten über Dünnringlager gelagert ist.

13. Verfahren zur berührungslosen Dickenmessung einer kontinuierlichen, insbesondere flexiblen, elastischen und/oder beschichteten, Materialbahn (2) mit den Schritten:
Führen einer Materialbahn (2) über einen zumindest abschnittsweise zylindrischen und hülsenförmigen Kontaktkörper (3);
Gleichzeitiges Erfassen einer Materialbahnoberseite (7) mittels eines ersten Sensors (5) und einer Materialbahnunterseite (8) mittels eines zweiten Sensors (6), wobei die Erfassungsbereiche beider Sensoren (5, 6) miteinander fluchten, und wobei der zweite Sensor (6) zumindest abschnittsweise innerhalb des Kontaktkörpers (3) und unterhalb des Kontaktbereichs zwischen der Materialbahn (2) und dem Kontaktkörper (3) angeordnet ist;
Bestimmen der Materialbahndicke (t) anhand der erfassten Sensorwerte des ersten und des zweiten Sensors (5, 6).

14. Verfahren nach Anspruch 13, wobei
die Materialbahn (2) durch den zylindrischen Kontaktkörper (3) umgelenkt wird.

## Claims

1. A device (1) for non-contact thickness measurement of a continuous, in particular flexible, elastic and/or coated, material sheet (2), comprising:
a contact body (3) that is cylindrical and sleeve-shaped at least in sections;
a material sheet (2) guided over a surface of the contact body (3);
a sensor arrangement (4) for measuring the material sheet thickness (t), wherein at least a first sensor (5) is directed towards a material sheet upper side (7) and at least a second sensor (6) is directed opposite the first sensor (5) towards a material sheet underside (8);
**characterized in that** the second sensor (6) is arranged at least in sections within the contact body (3) and below the contact region between the material sheet (2) and the contact body (3).

2. The device (1) according to claim 1, wherein
the second sensor (6) overlaps at least in sections with a cross-sectional area (A) of the cylindrical contact body (3) and is arranged between an axis of rotation (R) and the surface of the cylindrical contact body (3).

3. The device (1) according to claim 1 or 2, wherein
the detection region of the second sensor (6) comprises at least in sections an underside of the contact body, in particular an inner surface of the cylindrical contact body (3).

4. The device (1) according to any one of the preceding claims, wherein
the cylindrical contact body (3) has a cavity (9) in which the second sensor (6) is received.

5. The device (1) according to any one of the preceding claims, wherein
the surface of the contact body (3) has at least one opening (10) which lies at least in sections in the detection region of the second sensor (6).

6. The device (1) according to claim 5, wherein
the opening (10) extends substantially tangentially along the surface of the cylindrical contact body (3).

7. The device (1) according to claim 5 or 6, wherein
the opening (10) extends with at least one interruption around the entire circumference of the cylindrical contact body (3).

8. The device (1) according to any one of the preceding claims, wherein
the surface of the cylindrical contact body (3) has a plurality of parallel spaced openings (10).

9. The device (1) according to any one of the preceding claims, wherein
the surface of the cylindrical contact body (3) has a sieve structure.

10. The device (1) according to any one of the preceding claims, wherein
the sensors (5, 6) are arranged in a stationary position in relation to the direction of movement of the material sheet (X).

11. The device (1) according to any one of the preceding claims, wherein
the sensors (5, 6) are fastened to at least one linear guide (11) which can be adjusted transversely with respect to the direction of movement of the material sheet (X).

12. The device (1) according to any one of the preceding claims, wherein
the cylindrical contact body (3) is supported at its end faces by thin ring bearings.

13. A method for non-contact thickness measurement of a continuous, in particular flexible, elastic and/or coated, material sheet (2), comprising the steps of:
guiding a material sheet (2) over a contact body (3) that is cylindrical and sleeve-shaped at least in sections;
simultaneous detecting of a material sheet upper side (7) by means of a first sensor (5) and of a material sheet underside (8) by means of a second sensor (6), wherein the detection regions of both sensors (5, 6) are aligned to each other, and wherein the second sensor (6) is arranged, at least in sections, within the contact body (3) and below the contact region between the material sheet (2) and the contact body (3);
determining the material sheet thickness (t) based on the detected sensor values of the first and second sensor (5, 6).

14. The method according to claim 13, wherein
the material sheet (2) is deflected by the cylindrical contact body (3).

## Revendications

1. Agencement (1) de mesure sans contact de l'épaisseur d'une bande continue de matière (2), notamment flexible, élastique et/ou revêtue, comprenant :
un corps de contact (3) au moins partiellement cylindrique et en forme de manchon ;
une bande de matière (2) guidée sur une surface du corps de contact (3) ;
un agencement de capteurs (4) pour mesurer l'épaisseur de la bande de matière (t), dans lequel au moins un premier capteur (5) est dirigé vers la face supérieure (7) de la bande de matière et au moins un second capteur (6) est dirigé à l'opposé du premier capteur (5) vers la face inférieure (8) de la bande de matière ;
**caractérisé en ce que** le second capteur (6) est disposé au moins partiellement à l'intérieur du corps de contact (3) et sous la zone de contact entre la bande de matière (2) et le corps de contact (3).

2. Agencement (1) selon la revendication 1, dans lequel
le second capteur (6) chevauche au moins partiellement une zone de section transversale (A) du corps de contact cylindrique (3) et est disposé entre un axe de rotation (R) et la surface du corps de contact cylindrique (3).

3. Agencement (1) selon la revendication 1 ou 2, dans lequel
la zone de détection du second capteur (6) comprend au moins partiellement la face inférieure du corps de contact, en particulier une face intérieure du corps de contact cylindrique (3).

4. Agencement (1) selon l'une quelconque des revendications précédentes, dans lequel le corps de contact cylindrique (3) comporte une cavité (9), dans laquelle le second capteur (6) est logé.

5. Agencement (1) selon l'une quelconque des revendications précédentes, dans lequel la surface du corps de contact (3) comporte au moins une ouverture (10) qui se trouve au moins partiellement dans la zone de détection du second capteur (6).

6. Agencement (1) selon la revendication 5, dans lequel
l'ouverture (10) s'étend sensiblement tangentiellement le long de la surface du corps de contact cylindrique (3).

7. Agencement (1) selon la revendication 5 ou 6, dans lequel
l'ouverture (10) s'étend avec au moins une interruption autour de toute la circonférence du corps de contact cylindrique (3).

8. Agencement (1) selon l'une quelconque des revendications précédentes, dans lequel la surface du corps de contact cylindrique (3) comporte une pluralité d'ouvertures espacées parallèlement (10).

9. Agencement (1) selon l'une quelconque des revendications précédentes, dans lequel la surface du corps de contact cylindrique (3) comporte une structure de tamisage.

10. Agencement (1) selon l'une quelconque des revendications précédentes, dans lequel les capteurs (5, 6) sont disposés en position stationnaire par rapport à la direction de déplacement de la bande de matière (X).

11. Agencement (1) selon l'une quelconque des revendications précédentes, dans lequel les capteurs (5, 6) sont fixés à au moins un guidage linéaire (11) réglable transversalement à la direction de déplacement de la bande de matière (X).

12. Agencement (1) selon l'une quelconque des revendications précédentes, dans lequel le corps de contact cylindrique (3) est supporté à ses extrémités par des paliers annulaires minces.

13. Procédé de mesure sans contact de l'épaisseur d'une bande continue de matière (2), notamment flexible, élastique et/ou revêtue, comprenant les étapes suivantes :
guidage d'une bande matière (2) sur un corps de contact (3) au moins partiellement cylindrique et en forme de manchon ;
détection simultanée d'une face supérieure (7) de la bande de matière à l'aide d'un premier capteur (5) et d'une face inférieure (8) de la bande de matière à l'aide d'un second capteur (6), dans lequel les zones de détection des deux capteurs (5, 6) sont alignées l'une avec l'autre, et dans lequel le second capteur (6) est disposé au moins partiellement à l'intérieur du corps de contact (3) et en dessous de la zone de contact entre la bande de matière (2) et le corps de contact (3) ;
détermination de l'épaisseur de la bande de matière (t) à l'aide des valeurs détectées par les premier et second capteurs (5, 6).

14. Procédé selon la revendication 13, dans lequel
la bande de matière (2) est déviée par le corps de contact cylindrique (3).
